# EUROPÄISCHE PATENTSCHRIFT

(11) **EP 2 599 258 B1**
(45) Veröffentlichungstag und Bekanntmachung des Hinweises auf die Patenterteilung: **29.06.2016**
(21) Anmeldenummer: 11751850.6
(22) Anmeldetag: 16.08.2011
(51) Int. Cl.: H04L 9/32, H04L 29/06, H04L 1/24, G06F 21/64

(54) **VERFAHREN ZUM VERARBEITEN VON NACHRICHTEN IN EINEM KOMMUNIKATIONSNETZ AUS MEHREREN NETZKNOTEN**
METHOD TO PROCESS MESSAGES IN A COMMUNICATION NETWORK OF SEVERAL NETWORK NODES
PROCÉDÉ DE TRAITEMENT DE MESSAGES DANS UN RÉSEAU DE COMMUNICATION AYANT PLUSIEURS NOEUDS DE RÉSEAU

(30) Priorität: 09.09.2010 DE 102010044858
(43) Veröffentlichungstag der Anmeldung: 05.06.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/064109
(87) Internationale Veröffentlichungsnummer: WO 2012/031861

(56) Entgegenhaltungen:
- EP-A1- 1 615 370
- DE-A1-102007 040 094
- DE-A1-102008 009 691
- US-A1- 2002 010 874

## Beschreibung

Die Erfindung betrifft ein Verfahren zum Verarbeiten von Nachrichten in einem Kommunikationsnetz aus mehreren Netzknoten sowie ein entsprechendes Kommunikationsnetz und einen entsprechenden Netzknoten.

Aus dem Stand der Technik ist es bekannt, in einem Kommunikationsnetz übertragene Nachrichten mit einer Prüfinformation zu versehen. Beispielsweise kann über eine sog. CRC-Prüfsumme (CRC = Cyclic Redundancy Check) ermittelt werden, ob die Daten einer Nachricht bei der Übertragung aufgrund von Übertragungsfehlern verändert wurden. Ebenso ist es bekannt, Nachrichten mit kryptographischen Prüfsummen zu versehen, wobei diese Prüfsummen unter Verwendung eines Geheimnisses generiert werden. Hierdurch kann sichergestellt werden, dass nur derjenige, der in Besitz des kryptographischen Geheimnisses ist, eine verifizierbare Prüfsumme erzeugen kann. Hierdurch wird der unbefugten Übermittlung von Nachrichten in einem Kommunikationsnetz entgegengewirkt. Ferner kann anhand der kryptographischen Prüfsummen auch festgestellt werden, ob die Nachricht unbefugt durch einen Angreifer manipuliert wurde.

Die Verwendung von Prüfinformationen bei der Übertragung von Nachrichten in einem Kommunikationsnetz ermöglicht zwar einen effektiven Schutz vor Angriffen, hat jedoch den Nachteil, dass zur Prüfung der Prüfinformation in der Regel aufwändige kryptographische Operationen durchgeführt werden müssen, welche die weitere Verarbeitung der Nachricht verzögern. Dies ist insbesondere in Kommunikationsnetzen für Automatisierungsanlagen von Relevanz. Dort werden über die Nachrichten meist Kommandos bzw. Steueranweisungen an miteinander vernetzte Geräte der Automatisierungsanlage gegeben. Diese Kommandos sind häufig zeitkritisch, d.h. sie dürfen nur mit geringer Verzögerung ausgeführt werden, da sonst Störungen im Betrieb der Automatisierungsanlage auftreten können.

In der Druckschrift DE 10 2007 040 094 B4 wird ein Verfahren zur reversiblen Durchführung einer an einen Berechtigungsnachweis gekoppelten Konfigurationsänderung in einem Steuergerät beschrieben. Dabei wird es ermöglicht, die Konfigurationsänderung rückgängig zu machen, wenn der Berechtigungsnachweis später widerrufen wird.

In der Druckschrift DE 10 2007 053 255 A1 wird ein Verfahren zur Bearbeitung von Nachrichten in einer Nachrichtenbearbeitungsvorrichtung beschrieben, wobei eine Priorität hinsichtlich der Sicherheitsüberprüfung der jeweiligen Nachricht in Abhängigkeit von dem Inhalt der Nachricht festgelegt wird.

Die Druckschrift EP 1 615 370 A1 beschreibt die Authentisierung von zwischen einem Sender und einem Empfänger übermittelten Nachrichten. Eine jeweilige Nachricht ist mit einem MAC-Code geschützt, der unter Einbeziehung von zuvor übermittelten Nachrichten erzeugt wurde. Bei erfolgreicher Verifikation des MAC-Codes einer übermittelten Nachricht wird diese als vorläufig authentisch eingestuft. Erst wenn eine vorbestimmte Anzahl von nachfolgend übermittelten Nachrichten auch als vorläufig authentisch eingestuft wurde, wird die entsprechende Nachricht als endgültig authentisch deklariert.

Aufgabe der Erfindung ist es, ein Verfahren zum Bearbeiten von Nachrichten in einem Kommunikationsnetz zu schaffen, bei dem die jeweiligen Nachrichten durch eine Prüfinformation geschützt sind und dennoch eine schnelle Verarbeitung der Nachrichten in dem Kommunikationsnetz erfolgt.

Diese Aufgabe wird durch das Verfahren gemäß Patentanspruch 1 bzw. das Kommunikationsnetz gemäß Patentanspruch 15 bzw. den Netzknoten gemäß Patentanspruch 17 gelöst. Weiterbildungen der Erfindung sind in den abhängigen Ansprüchen definiert.

Das erfindungsgemäße Verfahren dient zum Verarbeiten von Nachrichten in einem Kommunikationsnetz aus mehreren Netzknoten, wobei das Kommunikationsnetz vorzugsweise das Kommunikationsnetz einer Automatisierungsanlage ist. In diesem Anwendungsszenario stellen die einzelnen Netzknoten Komponenten der Automatisierungsanlage dar, welche im Betrieb der Anlage entsprechende Aufgaben im Rahmen des durch die Anlage automatisierten Vorgangs durchführen. Insbesondere stellen die Netzknoten dabei Steuergeräte, Sensoren, Aktoren, zwischengeschaltete Switches (z.B. Ethernet-Switches) und dergleichen dar. Die Automatisierungsanlage kann dabei eine Anlage zur Prozessautomatisierung oder zur Fertigungsautomatisierung sein. Ebenso kann die Automatisierungsanlage eine Anlage zur Gebäudeautomatisierung oder Energieautomatisierung darstellen.

Im Rahmen des erfindungsgemäßen Verfahrens werden in einem Schritt a) zwischen Netzknoten des Kommunikationsnetzes Nachrichten übermittelt, welche jeweils mit einer Prüfinformation kombiniert sind, die geprüft werden kann, um festzustellen, ob die entsprechende Nachricht zulässig ist. Eine Nachricht ist dabei dann zulässig, wenn sie zu einem positiven Prüfungsergebnis führt. Ansonsten wird die Nachricht als unzulässig eingestuft. Der Begriff der Zulässigkeit ist weit zu verstehen und kann an beliebige Kriterien gekoppelt sein, die geeignet festgelegt werden können. Beispielsweise kann eine Nachricht dann zulässig sein, wenn sie basierend auf einer Prüfinformation in der Form einer Prüfsumme erfolgreich verifiziert werden kann bzw. wenn ein Berechtigungsnachweis (z.B. ein Zertifikat), das an die Nachricht gekoppelt ist, erfolgreich verifiziert werden kann.

Das erfindungsgemäße Verfahren zeichnet sich dadurch aus, dass in einem Schritt b) für eine oder mehrere Nachrichten aus einer Menge von Nachrichten, welche für einen jeweiligen Netzknoten zumindest eines Teils der Netzknoten vorgesehen bzw. bestimmt sind, jeweils bei Empfang einer Nachricht in dem jeweiligen Netzknoten eine an die Nachricht gekoppelte Aktion ohne Prüfung der mit der Nachricht kombinierten Prüfinformation von dem jeweiligen Netzknoten ausgeführt wird, wobei nach Ausführung der Aktion die Prüfinformation durch den jeweiligen Netzknoten geprüft wird und bei einem negativen Prüfergebnis eine oder mehrere vorbestimmte Maßnahmen durchgeführt werden. Eine Nachricht steht somit im Zusammenhang mit einer vorbestimmten Aktion, wobei der Begriff der Aktion weit zu verstehen ist und insbesondere einen einzelnen Aktionsschritt oder auch eine Folge von mehreren Aktionsschritten umfassen kann. Die Nachricht stellt in einer bevorzugten Variante ein entsprechendes Kommando dar, das durch den jeweiligen Netzknoten ausgeführt werden kann. Wird das erfindungsgemäße Verfahren in einem Kommunikationsnetz einer Automatisierungsanlage eingesetzt, sind die Nachrichten vorzugsweise Kommandos in der Form von Steueranweisungen zur Ausführung von Schritten durch entsprechende Netzknoten im Rahmen eines durch die Automatisierungsanlage durchgeführten Vorgangs.

Die Bezeichnung der obigen Merkmale mit Schritt a) und b) dient lediglich zur einfacheren Referenzierung dieser Merkmale und legt keine Reihenfolge fest, in der die Schritte durchzuführen sind.

Das erfindungsgemäße Verfahren beruht auf der Idee, dass die meisten in einem Kommunikationsnetz übertragenen Nachrichten zulässig sind und zu einem positiven Prüfergebnis im Rahmen der Prüfung der Prüfinformation führen. Demzufolge werden die an die Nachrichten gekoppelten Aktionen zunächst ohne die Prüfung der Prüfinformation schnell ausgeführt, wobei jedoch im Falle, dass sich die Nachricht nach der Ausführung der Aktion für unzulässig herausstellt, entsprechende Maßnahmen definiert sind. Diese Maßnahmen dienen insbesondere dazu, das Kommunikationsnetz vor unzulässigen Nachrichten zu schützen. Im einfachsten Fall kann eine Maßnahme die Ausgabe einer Warnmeldung darstellen, so dass ein Bediener des Kommunikationsnetzes auf unzulässige Nachrichten hingewiesen wird und entsprechende weitere Schritte einleiten kann.

In einer besonders bevorzugten Ausführungsform umfasst die Prüfinformation, welche mit einer jeweiligen Nachricht kombiniert ist, eine geeignete Prüfsumme, welche unter Einbeziehung der Nachricht generiert wird, wobei bei der Prüfung der Prüfsumme feststellbar ist, ob die Nachricht verändert wurde, und wobei eine veränderte Nachricht eine unzulässige Nachricht darstellt. Die Prüfsumme kann dabei z.B. eine CRC-Prüfsumme sein, mit der die Integrität der Nachricht feststellbar ist. Vorzugsweise handelt es sich bei der Prüfsumme um eine kryptographische Prüfsumme, wobei die kryptographische Prüfsumme unter Verwendung eines kryptographischen Geheimnisses generiert ist, insbesondere unter Verwendung eines symmetrischen und/oder asymmetrischen kryptographischen Verfahrens. Dabei können beliebige, an sich aus dem Stand der Technik bekannte Verfahren zur Generierung solcher Prüfsummen verwendet werden, insbesondere basierend auf kryptographischen Hash-Funktionen, wie z.B. SHA-1, MD5, HMAC-SHA1, HMAC-MD5, AES-CBC-MAC. Ebenso kann die Prüfsumme basierend auf Signaturen mit geeigneten Signatur-Algorithmen generiert werden, wie z.B. RSA, DSA, EC-DSA und dergleichen.

Gegebenenfalls kann die Prüfinformation auch einen Berechtigungsnachweis, insbesondere in der Form eines Zertifikats, umfassen, wodurch geprüft werden kann, ob die Nachricht von einem Berechtigten übermittelt wurde. Dabei ist die Nachricht dann eine zulässige Nachricht, wenn der Berechtigungsnachweis im Rahmen der Prüfung der Prüfinformation erfolgreich verifiziert werden kann. Im Unterschied zu den obigen Prüfsummen kann der Berechtigungsnachweis ohne Einbeziehung der in der Nachricht enthaltenen Daten generiert werden.

In einer weiteren, besonders bevorzugten Ausführungsform des erfindungsgemäßen Verfahrens ist eine Wiederherstellungsinformation in dem jeweiligen Netzknoten gespeichert, über welche die in Schritt b) ausgeführte Aktion rückgängig gemacht werden kann. Die Wiederherstellungsinformation kann z.B. im Rahmen der Ausführung der an die Nachricht gekoppelten Aktion aus der Nachricht abgeleitet werden. Ebenso kann die Wiederherstellungsinformation bereits in der Nachricht enthalten sein. Die Wiederherstellungsinformation dient dazu, bei einem negativen Prüfungsergebnis in Schritt b) die an die Nachricht gekoppelte Aktion rückgängig zu machen, wobei dieses Rückgängigmachen eine Ausführungsform einer vorbestimmten Maßnahme darstellt, welche bei einem negativen Prüfungsergebnis durchgeführt wird.

Im Rahmen der Verwendung des Verfahrens in einem Kommunikationsnetz einer Automatisierungsanlage umfassen das oder die vorbestimmten Maßnahmen insbesondere einen Nothalt und/oder einen Notbetrieb von einem oder mehreren Komponenten der Automatisierungsanlage.

Der Schritt b) des erfindungsgemäßen Verfahrens kann gegebenenfalls immer durchgeführt werden, d.h. bei jedem Empfang einer Nachricht in dem entsprechenden Netzknoten, für den die Nachricht vorgesehen ist. Es besteht jedoch auch die Möglichkeit, dass Schritt b) nur für Nachrichten ausgeführt wird, welche ein oder mehrere Kriterien erfüllen, wobei für Nachrichten, welche das oder die Kriterien nicht erfüllen, zunächst die Prüfinformation der Nachricht geprüft wird und nur bei positivem Prüfergebnis anschließend die an die Nachricht gekoppelte Aktion ausgeführt wird. Auf diese Weise kann je nach Anwendungsfall in geeigneter Weise festgelegt werden, für welche Nachrichten zunächst die daran gekoppelte Aktion ohne Prüfung der Prüfinformation durchgeführt werden soll. In einer speziellen Ausführungsform sind die Nachrichten in zeitkritische und zeitunkritische Nachrichten eingestuft, wobei ein von der Nachricht zu erfüllendes Kriterium darin besteht, dass die Nachricht zeitkritisch ist. Das heißt, ist die an die Nachricht gekoppelte Aktion zeitkritisch und sollte schnell ausgeführt werden, wird die Nachricht als zeitkritisch eingestuft und ohne Prüfung der Prüfinformation weiterverarbeitet.

Bei der Verwendung des erfindungsgemäßen Verfahrens in einem Kommunikationsnetz einer Automatisierungsanlage können die Nachrichten ferner in für den Betrieb der Automatisierungsanlage kritische und unkritische Nachrichten eingestuft werden. Eine Nachricht ist dabei insbesondere kritisch, wenn die daran gekoppelte Aktion zu einer größeren Beschädigung der Automatisierungsanlage bzw. einem längeren Stillstand der Automatisierungsanlage führen kann. Dabei besteht ein von der Nachricht zu erfüllendes Kriterium darin, dass die Nachricht für den Betrieb der Automatisierungsanlage unkritisch ist, d.h. die an unkritische Nachrichten gekoppelten Aktionen werden sogleich ohne Prüfung der Prüfinformation ausgeführt, wohingegen kritische Nachrichten erst nach erfolgreicher Überprüfung der Prüfinformation weiterverarbeitet werden.

In einer weiteren Ausführungsform des erfindungsgemäßen Verfahrens besteht für eine Nachricht, deren daran gekoppelte Aktion einen oder mehrere Parameter in jeweiligen Netzknoten verändert, ein durch die Nachricht zu erfüllendes Kriterium darin, dass die Veränderung zumindest eines der Parameter unter einem vorbestimmten Maß bzw. nicht oberhalb des vorbestimmten Maßes liegt. Das heißt, wenn sich die Parameter nur geringfügig verändern, wird die Nachricht zunächst ohne Berücksichtigung der Prüfinformation weiterverarbeitet und die daran gekoppelte Aktion ausgeführt. Dabei wird davon ausgegangen, dass sich Parameter in einem jeweiligen Netzknoten im Normalbetrieb nur in einem bestimmten Wertebereich bewegen. Mit hoher Wahrscheinlichkeit sind deshalb Nachrichten mit Parameterveränderungen in diesem Wertebereich nicht manipuliert worden, so dass die an solche Nachrichten gekoppelten Aktionen ohne Prüfung der Prüfinformation zunächst ausgeführt werden können.

Die soeben beschriebene Variante des erfindungsgemäßen Verfahrens kommt wiederum vorzugsweise in einem Kommunikationsnetz einer Automatisierungsanlage zum Einsatz. Dabei sind das oder die Parameter eine oder mehrere im jeweiligen Netzknoten veränderbare Stellgrößen bezüglich eines durch die Automatisierungsanlage ausgeführten Vorgangs, z.B. Durchflussmengen von Flüssigkeiten oder Gasen, Ventilstellungen, Motordrehzahlen, Drucke und dergleichen.

In einer weiteren Ausgestaltung des erfindungsgemäßen Verfahrens besteht ein von der Nachricht zu erfüllendes Kriterium, wonach die an die Nachricht gekoppelte Aktion ohne Prüfung der Prüfinformation ausgeführt wird, darin, dass eine identische oder ähnliche Nachricht innerhalb einer vorbestimmten zurückliegenden Zeitspanne im jeweiligen Netzknoten empfangen und basierend auf Schritt b) ausgeführt wurde, wobei die Prüfung der Prüfinformation dieser identischen oder ähnlichen Nachrichten ferner zu einem positiven Prüfungsergebnis geführt hat. Bei dieser Ausführungsform macht man sich die Erkenntnis zu nutze, dass sich die Parameter in aufeinander folgenden Nachrichten in bestimmten Anwendungsszenarien, z.B. in einem Kommunikationsnetz einer Automatisierungsanlage, in der Regel nur langsam verändern, so dass eine geringe Änderung der Parameter der Nachricht auf eine nicht veränderte bzw. manipulierte Nachricht hindeutet, welche zunächst ohne Prüfung der Prüfinformation verarbeitet werden kann. Die Kriterien, wann eine Nachricht ähnlich zu einer anderen Nachricht eingestuft wird, können je nach Anwendungsfall geeignet festgelegt werden. Zum Beispiel kann eine Nachricht dann als ähnlich zu einer früheren Nachricht eingestuft werden, wenn sich die Nachrichtenparameter um maximal 5% verändert haben.

Neben dem oben beschriebenen Verfahren umfasst die Erfindung ferner ein Kommunikationsnetz mit einer Mehrzahl von Netzknoten, wobei die Netzknoten des Kommunikationsnetzes derart ausgestaltet sind, dass in dem Kommunikationsnetz das erfindungsgemäße Verfahren bzw. eine oder mehrere Varianten des erfindungsgemäßen Verfahrens durchführbar sind.

Die Erfindung betrifft darüber hinaus einen Netzknoten zur Verwendung in einem solchen Kommunikationsnetz, wobei der Netzknoten derart ausgestaltet ist, dass er bei Betrieb in dem erfindungsgemäßen Kommunikationsnetz für eine oder mehrere Nachrichten aus einer Menge von Nachrichten, welche für ihn vorgesehen sind, jeweils bei Empfang einer Nachricht ohne Prüfung der mit der Nachricht kombinierten Prüfinformation die an die Nachricht gekoppelte Aktion ausführt, wobei er nach Ausführung der Aktion die Prüfinformation prüft und bei einem negativen Prüfergebnis eine oder mehrere vorbestimmte Maßnahmen veranlasst bzw. selbst durchführt.

Ausführungsbeispiele der Erfindung werden nachfolgend anhand der beigefügten Figuren detailliert beschrieben.

Es zeigen:
- Fig. 1: eine schematische Darstellung der Übermittlung eines Kommandos im Rahmen einer Ausführungsform des erfindungsgemäßen Verfahrens;
- Fig. 2: eine schematische Darstellung einer Prozessanlage, in der Kommandos basierend auf dem erfindungsgemäßen Verfahren verarbeitet werden;
- Fig. 3: ein Diagramm, welches den Ablauf einer Ausführungsform des erfindungsgemäßen Verfahrens wiedergibt und
- Fig. 4: ein Diagramm, welches den Ablauf einer weiteren Ausführungsform des erfindungsgemäßen Verfahrens wiedergibt.

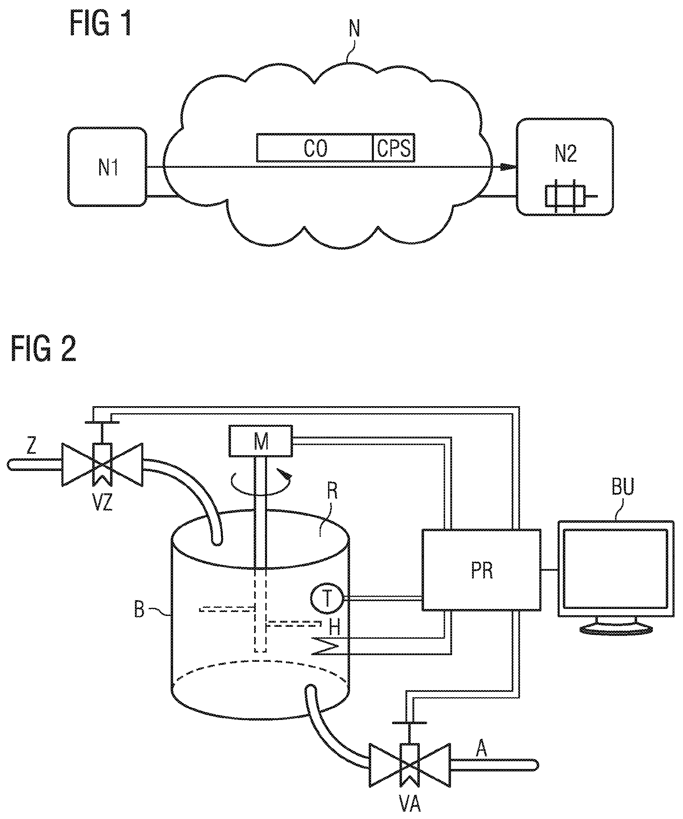

Im Folgenden wird das erfindungsgemäße Verfahren in Bezug auf Kommunikationsnetze in Automatisierungsanlagen beschrieben, in denen die einzelnen Netzknoten Komponenten der Automatisierungsanlage darstellen, welche untereinander über ein entsprechendes Netzwerk kommunizieren können. Fig. 1 zeigt ein solches Kommunikationsnetz N, in dem zwei Netzknoten N1 und N2 miteinander kommunizieren. Diese Netzknoten stellen entsprechende Geräte einer Automatisierungsanlage dar, wobei der Netzknoten N1 ein Steuergerät ist und der Netzknoten N2 ein durch das Steuergerät gesteuertes Gerät. Bei dem Steuergerät kann es sich beispielsweise um eine speicherprogrammierbare Steuerung handeln, welche über das Netzwerk mit dem gesteuerten Gerät verbunden ist, welches je nach Ausgestaltung der Automatisierungsanlage z.B. ein Motor, ein Ventil, ein Sensor und dergleichen sein kann. Das Netzwerk N kann beispielsweise ein Ethernet-Netz, insbesondere basierend auf Industrial-Ethernet, sein. Ebenso kann das Netz als IP-Netzwerk, Mobilfunknetz, WLAN-Netz und dergleichen ausgestaltet sein. Die über das Kommunikationsnetz N vernetzte Automatisierungsanlage kann ebenfalls beliebig ausgestaltet sein. Insbesondere kann es sich um eine Anlage zur Prozessautomatisierung bzw. zur Fertigungsautomatisierung handeln. Die Anlage kann gegebenenfalls auch eine Anlage zur Gebäudeautomatisierung bzw. Energieautomatisierung sein.

Im Rahmen des Betriebs der Anlage werden zwischen den Netzknoten bzw. Geräten Nachrichten in der Form von Kommandos ausgetauscht, wobei beispielhaft in Fig. 1 ein entsprechendes Kommando mit Bezugszeichen CO bezeichnet ist. Dieses Kommando wird von dem Steuergerät N1 zu dem gesteuerten Gerät N2 übertragen und gibt dem gesteuerten Gerät entsprechende, durch dieses Gerät auszuführende Anweisungen. Zum Schutz gegen Manipulationen durch Angreifer sind in der hier beschriebenen Ausführungsform alle Kommandos CO mit einer entsprechenden Prüfsumme versehen, welche in Fig. 1 mit CPS angedeutet ist und an das Kommando CO angehängt ist. In den nachfolgend beschriebenen Ausführungsformen handelt es sich dabei um eine kryptographische Prüfsumme, z.B. in der Form eines MACs (MAC = Message Authentication Code), mit dem die Authentizität des Kommandos CO über ein kryptographisches Geheimnis verifiziert werden kann.

Es können symmetrische und asymmetrische Verfahren zur Generierung der Prüfsumme verwendet werden. Bei symmetrischen Verfahren steht dem Steuergerät N1 und dem gesteuerten Gerät N2 der gleiche geheime Schlüssel zur Verfügung. Die Prüfsumme wurde dabei unter Einbeziehung des Kommandos CO und des geheimen Schlüssels generiert und kann entsprechend dem geheimen Schlüssel im gesteuerten Gerät N2 verifiziert werden. Ebenso ist es möglich, dass ein asymmetrisches Verfahren verwendet wird, bei dem die Prüfsumme mit einem privaten Schlüssel im Steuergerät N1 generiert wird und mit einem öffentlichen Schlüssel im gesteuerten Gerät verifiziert wird. Mit den oben beschriebenen kryptographischen Prüfsummen können Manipulationen in den Kommandos CO erkannt werden, da bei der Generierung und Verifikation der Prüfsumme das Kommando selbst einfließt, so dass bei einer Veränderung des Kommandos die Verifikation nicht mehr erfolgreich ist. Darüber hinaus kann ein Angreifer ohne Kenntnis über den entsprechenden (privaten) Schlüssel keine gültigen kryptographischen Prüfsummen berechnen und somit keine Kommandos in das Netz einspeisen.

Mit den oben beschriebenen kryptographischen Prüfsummen wird ein effizienter Schutz der Kommunikation in einer Automatisierungsanlage sichergestellt. Es erweist sich dabei jedoch als nachteilhaft, dass zur Verifikation der Prüfsumme rechenaufwändige kryptographische Operationen durchgeführt werden müssen, welche zu starken Verzögerungen im Betrieb der Automatisierungsanlage führen können. Diese Verzögerungen können für bestimmte, besonders zeitkritische Kommandos nicht mehr akzeptabel sein. Um solche Verzögerungen für bestimmte Kommandos zu vermeiden, wird in den nachfolgend beschriebenen Ausführungsformen beim Eintreffen vorbestimmter Kommandos in dem entsprechenden Netzknoten die Ausführung des jeweiligen Kommandos durch den Netzknoten zunächst ohne Prüfung der Prüfsumme veranlasst, um hierdurch Zeitverzögerungen zu vermeiden. Erst anschließend erfolgt die Prüfung der Prüfsumme, wobei im Falle einer nicht erfolgreichen Verifikation der Prüfsumme entsprechende Gegenmaßnahmen zum Schutz des Kommunikationsnetzes durchgeführt werden. Vorzugsweise wird dabei das ausgeführte Kommando wieder rückgängig gemacht. Dies wird durch eine entsprechende Wiederherstellungs- bzw. Roll-back-Information erreicht, welche bei der Ausführung des entsprechenden Kommandos in dem Netzknoten hinterlegt wird.

Fig. 2 zeigt schematisch ein Beispiel einer Automatisierungsanlage in der Form einer Prozessanlage, in der die Kommandos basierend auf dem erfindungsgemäßen Verfahren verarbeitet werden können. Im Betrieb der gezeigten Anlage wird eine Flüssigkeit einem Behälter zugeführt, in dem die Flüssigkeit verrührt wird. In Fig. 2 ist dabei der Behälter mit Bezugszeichen B bezeichnet, wobei die Flüssigkeit über einen Zulauf Z, der durch ein Ventil VZ geeignet geöffnet bzw. verschlossen werden kann, in den Behälter B fließt. In dem Behälter ist ein Rührer R vorgesehen, der über einen entsprechenden Motor M angetrieben wird und die Flüssigkeit in dem Behälter verrührt. Ferner ist am Behälter ein Temperaturmessfühler T und eine Heizung H vorgesehen. Über die Heizung wird die Flüssigkeit auf eine vorbestimmte Temperatur beim Verrühren erwärmt. Nach Durchführung des Verrührprozesses wird über eine Ableitung A mit entsprechendem Ventil VA die Flüssigkeit abgelassen und gegebenenfalls weiteren Stationen in der Automatisierungsanlage zugeführt. Der Prozess des Verrührens wird über einen Prozessrechner PR gesteuert, der wiederum Steuerbefehle von einer Bedien- und Überwachungseinheit BU empfängt. Der Prozessrechner PR ist dabei mit den weiteren Komponenten der Automatisierungsanlage, d.h. dem Zulauf-Ventil VZ, dem Ablauf-Ventil VA, der Heizung H, dem Temperaturmessfühler T und dem Motor M, verbunden. Die soeben genannten Komponenten sowie der Prozessrechner PR und die Bedien- und Überwachungseinheit BU stellen entsprechend miteinander kommunizierende Netzknoten im Sinne von Anspruch 1 dar.

Im Rahmen des in Fig. 2 dargestellten Prozesses werden dabei Kommandos bzw. Steueranweisungen von der Bedien- und Überwachungseinheit an den Prozessrechner PR sowie von dem Prozessrechner PR an den Motor M, an die Ventile VZ bzw. VA sowie die Heizung H übertragen. Auch kann das Übertragen eines Temperaturmesswerts von dem Temperaturmessfühler T an den Prozessrechner PR als ein entsprechendes Kommando aufgefasst werden, da der Prozessrechner PR abhängig von dem Temperaturwert eine Regelaktion durchführt, um die Flüssigkeit auf eine vorbestimmte Temperatur zu erwärmen bzw. auf dieser Temperatur zu halten. Die Kommunikation zwischen den Komponenten in dem Szenario der Fig. 2 kann z.B. über einen Feldbus, wie z.B. HART, PROFIBUS oder über ein Kommunikationsnetz basierend auf Ethernet bzw. IP erfolgen.

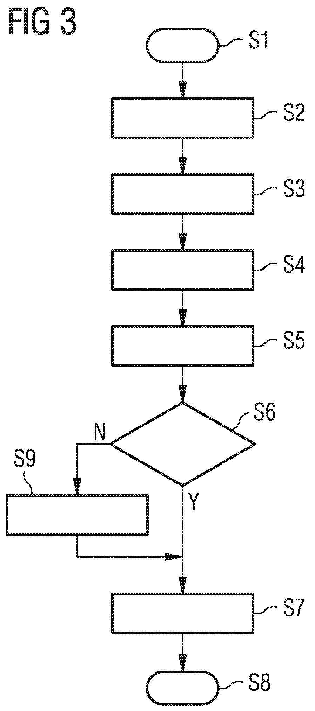

Nachfolgend wird anhand von Fig. 3 eine Ausführungsform eines erfindungsgemäßen Verfahrens erläutert, bei der jede in einem Netzknoten empfangene Steueranweisung unabhängig von ihrem Inhalt zunächst ausgeführt wird und erst anschließend deren Prüfsumme überprüft wird. Ein Netzknoten kann dabei z.B. eine Komponente der in Fig. 2 dargestellten Prozessanlage sein. Der Start des Verfahrens ist mit Schritt S1 bezeichnet. In Schritt S2 wird von einem entsprechenden Netzknoten eine Steueranweisung empfangen, wobei der Netzknoten aus der Steueranweisung in Schritt S3 eine Roll-Back-Information ableitet und speichert. Basierend auf dieser Roll-Back-Information kann eine ausgeführte Steueranweisung wieder rückgängig gemacht werden. Die Roll-Back-Information kann gegebenenfalls auch direkt in der Steueranweisung eincodiert sein. Anschließend wird die Steueranweisung in Schritt S4 ausgeführt, z.B. wird die Drehzahl eines Motors verändert bzw. entsprechende Ventile geöffnet oder geschlossen. Erst nach Ausführung der Steueranweisung wird in Schritt S5 die kryptographische Prüfsumme der Steueranweisung geprüft. Dabei wird in Schritt S6 festgestellt, ob die Prüfsumme gültig ist oder nicht. Ist die Prüfsumme gültig (Zweig Y aus Schritt S6), wird die zuvor in Schritt S3 gespeicherte Roll-Back-Information in Schritt S7 gelöscht und anschließend das Verfahren in Schritt S8 beendet. Ist demgegenüber die kryptographische Prüfsumme nicht gültig (Zweig N aus Schritt S6), wird basierend auf der Roll-back-Information die Steueranweisung in Schritt S9 rückgängig gemacht, so dass der Zustand des entsprechenden Netzknotens vor Ausführung der Steueranweisung wieder hergestellt wird. Anschließend erfolgt wiederum in Schritt S7 das Löschen der Steueranweisung und in Schritt S8 die Beendigung des Verfahrens.

Mit der in Fig. 3 dargestellten Variante des Verfahrens wird ein effizienter Betrieb der entsprechenden Automatisierungsanlage ohne langwierige Verzögerungen durch Überprüfung der kryptographischen Prüfsumme erreicht. Es wird dabei davon ausgegangen, dass Angriffe von Dritten in der Regel selten sind und in den meisten Fällen die Ausführung der entsprechenden Steueranweisung zulässig war. Für die seltenen Fälle, in denen die Prüfsumme der Steueranweisung nicht verifiziert werden kann, wird über eine entsprechende Roll-Back-Information sichergestellt, dass der Zustand der Automatisierungsanlage vor Durchführung der Steueranweisung wieder hergestellt wird.

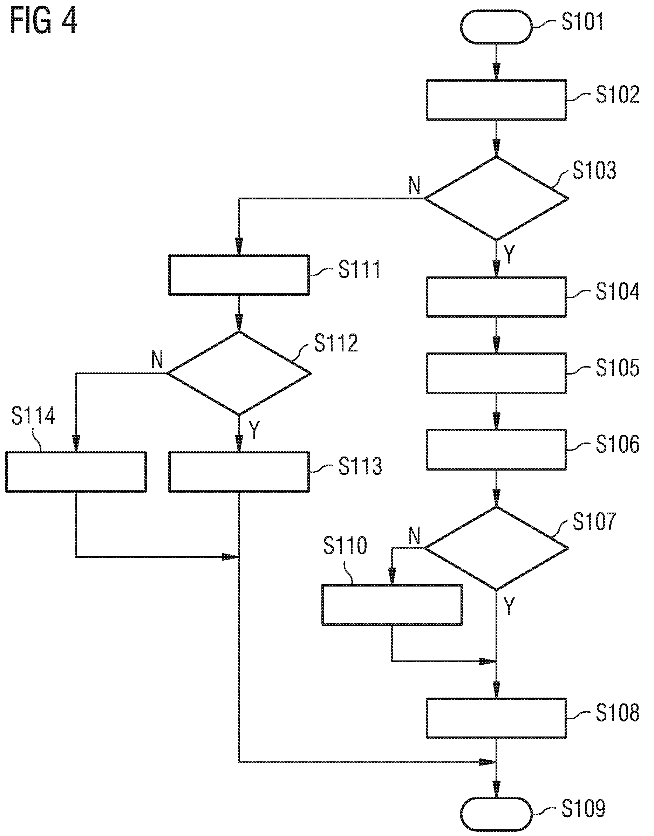

Fig. 4 zeigt eine weitere Variante des erfindungsgemäßen Verfahrens, bei der nur für vorbestimmte Steueranweisungen deren Ausführung ohne vorhergehende Überprüfung der Prüfsumme erfolgt. Es sind dabei vorbestimmte Kriterien festgelegt, wonach Steueranweisungen dahingehend spezifiziert werden, ob sie zunächst ohne Prüfung der Prüfsummen ausgeführt werden sollen oder erst nach erfolgter Prüfung der Prüfsumme. Beispielsweise kann eine Steueranweisung zum Abschalten eines Motors in der Automatisierungsanlage zunächst ohne Prüfung der Prüfsumme erfolgen, wohingegen eine Steueranweisung zum Anschalten des Motors erst nach erfolgter Prüfung der Prüfsumme erfolgen sollte. Dies liegt daran, dass der Vorgang des Abschaltens eines Motors zeitkritischer ist, da es sich z.B. um eine Notabschaltung aufgrund von Unregelmäßigkeiten handeln kann. In einem weiteren Beispiel kann eine Steueranweisung, welche eine Solldrehzahl, einen Solldruck, eine Solldurchflussmenge und dergleichen innerhalb eines vorbestimmten Wertebereichs ändert, zunächst ohne Überprüfung der Prüfsumme durchgeführt werden. Auch kann eine Steueranweisung z.B. nur dann ohne Prüfung der Prüfsumme ausgeführt werden, wenn innerhalb einer festgelegten zurückliegenden Zeitspanne eine identische bzw. ähnliche Steueranweisung mit gültiger kryptographischer Prüfsumme empfangen wurde. Unter einer ähnlichen Steueranweisung ist dabei eine Steueranweisung mit geringer Änderung der Parameter der Anweisung zu verstehen, beispielsweise mit einer Parameteränderung von weniger als 5%. Hierdurch wird berücksichtigt, dass sich Steueranweisungen in einen Automatisierungsprozess nur langsam in ihren Parametern ändern und somit davon ausgegangen werden kann, dass eine Steueranweisung, deren Parameter gegenüber früheren Steueranweisungen nur geringfügig anders ist, nicht manipuliert wurde.

Der Start des Verfahrens der Fig. 4 ist durch Schritt S101 angedeutet. In Schritt S102 wird eine Steueranweisung in einem entsprechenden Netzknoten empfangen. Im Unterschied zur Ausführungsform der Fig. 3 überprüft der Netzknoten in Schritt S103 zunächst, um welche Art von Steueranweisung es sich handelt. Ist die Steueranweisung dabei eine Steueranweisung, welche ohne Prüfung der kryptographischen Prüfsumme ausgeführt wird (Zweig Y aus Schritt S103), wird wiederum eine entsprechende Roll-Back-Information in Schritt S104 aus der Steueranweisung abgeleitet und gespeichert. Anschließend wird in Schritt S105 die Steueranweisung ausgeführt und erst anschließend in Schritt S106 die kryptographische Prüfsumme der Steueranweisung geprüft. Ergibt sich dabei in Schritt S107, dass die kryptographische Prüfsumme gültig ist (Zweig Y aus S107), wird die vorab gespeicherte Roll-Back-Information in Schritt S108 gelöscht und das Verfahren in Schritt S109 beendet. Ist demgegenüber die kryptographische Prüfinformation ungültig (Zweig N aus S107), wird die Steueranweisung basierend auf der Roll-Back-Information in Schritt S110 rückgängig gemacht und anschließend die Roll-Back-Information wieder in Schritt S108 gelöscht sowie das Verfahren in Schritt S109 beendet.

Ergibt sich im obigen Schritt S103, dass die Steueranweisung eine Anweisung ist, welche erst nach erfolgreicher Prüfung der kryptographischen Prüfsumme auszuführen ist (Zweig N aus Schritt S103), wird zunächst in Schritt S111 die kryptographische Prüfsumme geprüft. Wird dabei in Schritt S112 festgestellt, dass die Prüfsumme gültig ist (Zweig Y aus Schritt S112), erfolgt die Ausführung der Steueranweisung in Schritt S113 und anschließend wird das Verfahren in Schritt S109 beendet. Wird demgegenüber in Schritt S112 die Ungültigkeit der kryptographischen Prüfsumme der Steueranweisung festgestellt (Zweig N aus Schritt S112), wird die Steueranweisung in Schritt S114 verworfen und anschließend das Verfahren in Schritt S109 beendet.

Die im Vorangegangenen beschriebenen Ausführungsformen des erfindungsgemäßen Verfahrens weisen eine Reihe von Vorteilen auf. Insbesondere können zumindest manche, für den Betrieb einer Automatisierungsanlage unkritische Steueranweisungen ohne zusätzliche Verzögerung durch Prüfung einer kryptographischen Prüfsumme ausgeführt werden. Dadurch werden Verzögerungen vermieden. Ein möglicher unerwünschter Effekt ist zeitlich beschränkt auf die Dauer, bis die kryptographische Prüfsumme verifiziert wurde. Bei der Realisierung von Regelungsaufgaben werden auf diese Weise Totzeiten verringert, so dass ein besseres Regelverhalten im Hinblick auf Stabilität und Regeldynamik erzielt werden kann.

## Patentansprüche

1. Verfahren zum Verarbeiten von Nachrichten (CO) in einem Kommunikationsnetz (N) aus mehreren Netzknoten (N1, N2), insbesondere in einem Kommunikationsnetz (N) einer Automatisierungsanlage, bei dem:
a) zwischen Netzknoten (N1, N2) des Kommunikationsnetzes Nachrichten (CO) übermittelt werden, welche jeweils mit einer Prüfinformation (CPS) kombiniert sind, die geprüft werden kann, um festzustellen, ob die entsprechende Nachricht (CO) zulässig ist, wobei eine zulässige Nachricht (CO) zu einem positiven Prüfergebnis und eine unzulässige Nachricht (CO) zu einem negativen Prüfergebnis führt;
**dadurch gekennzeichnet, dass**
b) für eine oder mehrere Nachrichten (CO) aus einer Menge von Nachrichten (CO), welche für einen jeweiligen Netzknoten (N1, N2) zumindest eines Teils der Netzknoten (N1, N2) vorgesehen sind, jeweils bei Empfang einer Nachricht (CO) in dem jeweiligen Netzknoten (N1, N2) eine an die Nachricht (CO) gekoppelte Aktion ohne Prüfung der mit der Nachricht (CO) kombinierten Prüfinformation (CPS) von dem jeweiligen Netzknoten (N1, N2) ausgeführt wird, wobei nach Ausführung der Aktion die Prüfinformation (CPS) durch den jeweiligen Netzknoten (N1, N2) geprüft wird und bei einem negativem Prüfergebnis eine oder mehrere vorbestimmte Maßnahmen durchgeführt werden.

2. Verfahren nach Anspruch 1, bei dem das Verfahren in einem Kommunikationsnetz (N) einer Automatisierungsanlage eingesetzt wird und die Nachrichten (CO) zumindest teilweise Steueranweisungen zur Ausführung von Schritten durch entsprechende Netzknoten (N1, N2) im Rahmen eines durch die Automatisierungsanlage ausgeführten Vorgangs darstellen.

3. Verfahren nach Anspruch 1 oder 2, bei dem die Prüfinformation (CPS) eine Prüfsumme umfasst, welche unter Einbeziehung der Nachricht (CO) generiert wird, wobei bei der Prüfung der Prüfsumme feststellbar ist, ob die Nachricht (CO) verändert wurde, und wobei eine veränderte Nachricht (CO) eine unzulässige Nachricht (CO) darstellt.

4. Verfahren nach Anspruch 3, bei dem die Prüfsumme (CPS) eine CRC-Prüfsumme und/oder kryptographische Prüfsumme ist, wobei die kryptographische Prüfsumme unter Verwendung eines kryptographischen Geheimnisses generiert ist, insbesondere unter Verwendung eines symmetrischen und/oder asymmetrischen kryptographischen Verfahrens.

5. Verfahren nach einem der vorhergehenden Ansprüche, bei dem die Prüfinformation (CPS) einen Berechtigungsnachweis, insbesondere ein Zertifikat, umfasst, wobei die Nachricht (CO) eine zulässige Nachricht (CO) ist, wenn der Berechtigungsnachweis im Rahmen der Prüfung der Prüfinformation (CPS) erfolgreich verifiziert werden kann.

6. Verfahren nach einem der vorhergehenden Ansprüche, bei dem eine Wiederherstellungsinformation in dem jeweiligen Netzknoten (N1, N2) gespeichert ist, über welche die in Schritt b) ausgeführte Aktion rückgängig gemacht werden kann, wobei das oder die vorbestimmten Maßnahmen bei einem negativen Prüfergebnis in Schritt b) das Rückgängigmachen der Aktion basierend auf der Wiederherstellungsinformation umfassen.

7. Verfahren nach einem der vorhergehenden Ansprüche, bei dem das oder die vorbestimmten Maßnahmen bei einem negativen Prüfergebnis in Schritt b) die Ausgabe einer Warnmeldung umfassen.

8. Verfahren nach einem der vorhergehenden Ansprüche, bei dem das Verfahren in einem Kommunikationsnetz einer Automatisierungsanlage eingesetzt wird und das oder die vorbestimmten Maßnahmen bei einem negativen Prüfergebnis in Schritt b) einen Nothalt und/oder Notbetrieb von einem oder mehreren Komponenten der Automatisierungsanlage umfassen.

9. Verfahren nach einem der vorhergehenden Ansprüche, bei dem Schritt b) für Nachrichten (CO) ausgeführt wird, welche ein oder mehrere Kriterien erfüllen, wobei für Nachrichten (CO), welche das oder die Kriterien nicht erfüllen, zunächst die Prüfinformation (CPS) der Nachricht (CO) geprüft wird und nur bei positivem Prüfergebnis anschließend die an die Nachricht (CO) gekoppelte Aktion ausgeführt wird.

10. Verfahren nach Anspruch 9, bei dem die Nachrichten (CO) in zeitkritische und zeitunkritische Nachricht (CO) eingestuft werden, wobei ein von der Nachricht (CO) zu erfüllendes Kriterium darin besteht, dass die Nachricht (CO) zeitkritisch ist.

11. Verfahren nach Anspruch 9 oder 10, bei dem das Verfahren in einem Kommunikationsnetz einer Automatisierungsanlage eingesetzt wird und die Nachrichten (CO) in für den Betrieb der Automatisierungsanlage kritische und unkritische Nachrichten (CO) eingestuft werden, wobei ein von der Nachricht (CO) zu erfüllendes Kriterium darin besteht, dass die Nachricht (CO) für den Betrieb der Automatisierungsanlage unkritisch ist.

12. Verfahren nach einem der Ansprüche 9 bis 11, bei dem für eine Nachricht (CO), deren dran gekoppelte Aktion einen oder mehrere Parameter im jeweiligen Netzknoten (N1, N2) verändert, ein zu erfüllendes Kriterium darin besteht, das die Veränderung zumindest eines der Parameter unter einem vorbestimmten Maß oder nicht oberhalb des vorbestimmten Maßes liegt.

13. Verfahren nach Anspruch 12, bei dem das Verfahren in einem Kommunikationsnetz einer Automatisierungsanlage eingesetzt wird und das oder die Parameter eine oder mehrere, im jeweiligen Netzknoten (N1, N2) veränderbare Stellgrößen bezüglich eines durch die Automatisierungsanlage ausgeführten Vorgangs betreffen.

14. Verfahren nach einem der Ansprüche 9 bis 13, bei dem ein von der Nachricht (CO) zu erfüllendes Kriterium darin besteht, dass eine identische oder ähnliche Nachricht (CO) innerhalb einer vorbestimmten zurückliegenden Zeitspanne im jeweiligen Netzknoten (N1, N2) empfangen und basierend auf Schritt b) ausgeführt wurde, wobei die Prüfung der Prüfinformation (CPS) dieser identischen oder ähnlichen Nachricht (CO) ferner zu einem positiven Prüfergebnis geführt hat.

15. Kommunikationsnetz mit mehreren Netzknoten (N1, N2), insbesondere Kommunikationsnetz (N) einer Automatisierungsanlage, wobei die Netzknoten (N1, N2) des Kommunikationsnetzes derart ausgestaltet sind, dass ein Verfahren durchführbar ist, bei dem:
a) zwischen Netzknoten (N1, N2) des Kommunikationsnetzes Nachrichten (CO) übermittelt werden, welche jeweils mit einer Prüfinformation (CPS) kombiniert sind, die geprüft werden kann, um festzustellen, ob die entsprechende Nachricht (CO) zulässig ist, wobei eine zulässige Nachricht (CO) zu einem positiven Prüfergebnis und eine unzulässige Nachricht (CO) zu einem negativen Prüfergebnis führt;
**dadurch gekennzeichnet, dass**
b) für eine oder mehrere Nachrichten (CO) aus einer Menge von Nachrichten (CO), welche für einen jeweiligen Netzknoten (N1, N2) zumindest eines Teils der Netzknoten (N1, N2) vorgesehen sind, jeweils bei Empfang einer Nachricht (CO) in dem jeweiligen Netzknoten (N1, N2) eine an die Nachricht (CO) gekoppelte Aktion ohne Prüfung der mit der Nachricht (CO) kombinierten Prüfinformation (CPS) von dem jeweiligen Netzknoten (N1, N2) ausgeführt wird, wobei nach Ausführung der Aktion die Prüfinformation (CPS) durch den jeweiligen Netzknoten (N1, N2) geprüft wird und bei einem negativem Prüfergebnis eine oder mehrere vorbestimmte Maßnahmen durchgeführt werden.

16. Kommunikationsnetz nach Anspruch 15, welches derart ausgestaltet ist, dass in dem Kommunikationsnetz (N) ein Verfahren nach einem der Ansprüche 2 bis 14 durchführbar ist.

17. Netzknoten zur Verwendung in einem Kommunikationsnetz nach Anspruch 15 oder 16, wobei der Netzknoten (N1, N2) derart ausgestaltet ist, dass er bei Betrieb in dem Kommunikationsnetz für eine oder mehrere Nachrichten (CO) aus einer Menge von Nachrichten (CO), welche für ihn vorgesehen sind, jeweils bei Empfang einer Nachricht (CO) ohne Prüfung der mit der Nachricht (CO) kombinierten Prüfinformation (CPS) die an die Nachricht gekoppelte Aktion ausführt, wobei er nach Ausführung der Aktion (CO) die Prüfinformation (CPS) prüft und bei einem negativem Prüfergebnis eine oder mehrere vorbestimmte Maßnahmen veranlasst.

## Claims

1. Method for processing messages (CO) in a communication network (N) consisting of several network nodes (N1, N2), in particular in a communication network (N) of an automation system, in which:
a) messages (CO) are transmitted between network nodes (N1, N2) of the communication network that are in each case combined with test information (CPS) which can be verified in order to determine whether the corresponding message (CO) is admissible, wherein an admissible message (CO) leads to a positive test result and an inadmissible message (CO) leads to a negative test result;
**characterised in that**
b) for one or more messages (CO) out of a quantity of messages (CO) which are provided for a respective network node (N1, N2), of at least a portion of the network nodes (N1, N2), an action coupled to the message (CO) is carried out without verification of the test information (CPS) from the respective network node (N1, N2) that is combined with the message (CO), in each case when a message (CO) is received in the respective network node (N1, N2), wherein, upon execution of the action, the test information (CPS) is verified by the respective network node (N1, N2) and, when the test result is negative, one or more predefined measures are carried out.

2. Method as claimed in claim 1, in which the method is used in a communication network (N) of an automation system and at least some the messages (CO) are control instructions for the execution of steps by corresponding network nodes (N1, N2) during a process executed by the automation system.

3. Method as claimed in claim 1 or 2, in which the test information (CPS) comprises a checksum that is generated taking account of the message (CO), wherein, when the checksum is verified, it is possible to determine whether the message (CO) has been changed, and wherein a changed message (CO) is an inadmissible message (CO).

4. Method as claimed in claim 3, in which the checksum (CPS) is a CRC checksum and/or a cryptographic checksum, wherein the cryptographic checksum is generated using a cryptographic hidden input, in particular using a symmetrical and/or asymmetrical cryptographic method.

5. Method as claimed in one of the preceding claims, in which the test information (CPS) comprises proof of authorisation, in particular a certificate, wherein the message (CO) is an admissible message (CO) if the proof of authorisation can be positively verified when the test information (CPS) is verified.

6. Method as claimed in one of the preceding claims, in which restore information is stored in the particular network node (N1, N2) via which the action carried out in step b) can be reversed, wherein the predefined measure or measures in the event of a negative test result in step b) comprise the reversal of the action carried out on the basis of the restore information.

7. Method as claimed in one of the preceding claims, in which the predefined measure or measures in the event of a negative test result in step b) comprise a warning message.

8. Method as claimed in one of the preceding claims, in which the method is used in a communication network of an automation system and the predefined measure or measures comprise an emergency stop, and/or the operation in emergency mode, of one or more components of the automation system.

9. Method as claimed in one of the preceding claims, in which step b) is carried out for messages (CO) that fulfil one or more criteria, wherein, for messages (CO) which do not fulfil the criterion or criteria the test information (CPS) of the message (CO) is checked first and the action coupled to the message (CO) is then only carried out if the test result is positive.

10. Method as claimed in claim 9, in which the messages (CO) are classed as time-critical or not time-critical, wherein a criterion to be fulfilled by a message (CO) is that the message (CO) is time-critical.

11. Method as claimed in claim 9 or 10, in which the method is used in a communication network of an automation system and the messages (CO) are classed as critical to the operation of the automation system or not critical to the operation of the automation system, wherein a criterion to be fulfilled by the message (CO) is that the message (CO) is not critical to the operation of the automation system.

12. Method as claimed in one of claims 9 to 11, in which for a message (CO) of which the action coupled to it changes one or more parameters in the respective network node (N1, N2), a criterion to be fulfilled is that the change in at least one of the parameters is less than a predefined amount, or is not above the predefined amount.

13. Method as claimed in claim 12, in which the method is used in a communication network of an automation system and the parameter or parameters are one or more correcting variables that can be changed in the respective network node (N1, N2) and relate to a process executed by the automation system.

14. Method as claimed in one of claims 9 to 13, in which a criterion to be fulfilled by the message (CO) is that an identical or similar message (CO) was received in the respective network node (N1, N2) within a predefined period in the past and was processed on the basis of step b), and wherein the verification of the test information (CPS) of this identical or similar message (CO) also led to a positive test result.

15. Communication network with several network nodes (N1, N2), in particular a communication network (N) of an automation system, wherein the network nodes (N1, N2) of the communication network are configured in such a way that a method can be executed in which:
a) messages (CO) are transmitted between network nodes (N1, N2) of the communication network that are in each case combined with test information (CPS) which can be verified in order to determine whether the corresponding message (CO) is admissible, wherein an admissible message (CO) leads to a positive test result and an inadmissible message (CO) leads to a negative test result;
**characterised in that**
b) for one or more messages (CO) out of a quantity of messages (CO) which are provided for a respective network node (N1, N2), of at least a portion of the network nodes (N1, N2), an action coupled to the message (CO) is carried out without verification of the test information (CPS) from the respective network node (N1, N2) that is combined with the message (CO), in each case when a message (CO) is received in the respective network node (N1, N2), wherein, upon execution of the action, the test information (CPS) is verified by the respective network node (N1, N2) and, when the test result is negative, one or more predefined measures are carried out.

16. Communication network as claimed in claim 15, which is configured in such a way that a method as claimed in one of claims 2 to 4 can be executed in the communication network (N).

17. Network node for use in a communication network as claimed in claim 15 or 16, wherein the network node (N1, N2) is configured in such a way that, when in operation in the communication network, it carries out the action coupled to one or more messages (CO) out of a quantity of messages (CO) that are provided for it, in each case when a message (CO) is received, without checking the test information (CPS) combined with the message, and wherein the network node (N1, N2) verifies the test information (CPS) after the action has been carried out and, in the event of a negative test result, initiates the implementation of one or more predefined measures.

## Revendications

1. Procédé de traitement de messages (CO) dans un réseau de communication (N) ayant plusieurs noeuds de réseau (N1, N2), en particulier dans un réseau de communication (N) d'une installation d'automatisation, dans lequel
a) on transmet entre des noeuds de réseau (N1, N2) du réseau de communication des messages (CO), qui sont chaque fois combinés avec une information de contrôle (CPS), qui peut être contrôlée afin de constater si le message correspondant (CO) est acceptable, dans lequel un message acceptable (CO) conduit à un résultat de contrôle positif et un message inacceptable (CO) conduit à un résultat de contrôle négatif;
**caractérisé en ce que**
b) pour un ou plusieurs message (s) (CO) parmi une quantité de messages (CO), qui sont prévus pour un noeud de réseau respectif (N1, N2) d'au moins une partie des noeuds de réseau (N1, N2), on effectue chaque fois avec le noeud de réseau respectif (N1, N2) à la réception d'un message (CO) dans le noeud de réseau respectif (N1, N2) une action couplée au message (CO) sans contrôle de l'information de contrôle (CPS) combinée au message (CO), dans lequel, après avoir effectué l'action, on contrôle l'information de contrôle (CPS) au moyen du noeud de réseau respectif (N1, N2) et, en cas de résultat de contrôle négatif, on applique une ou plusieurs mesure(s) prédéterminée(s).

2. Procédé selon la revendication 1, dans lequel on applique le procédé dans un réseau de communication (N) d'une installation d'automatisation et les messages (CO) représentent au moins partiellement des instructions de commande pour l'exécution d'étapes par des noeuds de réseau correspondants (N1, N2) dans le cadre d'un processus exécuté par l'installation d'automatisation.

3. Procédé selon la revendication 1 ou 2, dans lequel l'information de contrôle (CPS) comprend une somme de contrôle, qui est générée en tenant compte du message (CO), dans lequel on peut constater lors du contrôle de la somme de contrôle si le message (CO) a été modifié, et dans lequel un message modifié (CO) représente un message inacceptable (CO).

4. Procédé selon la revendication 3, dans lequel la somme de contrôle (CPS) est une somme de contrôle CRC et/ou cryptographique, dans lequel la somme de contrôle cryptographique est générée en utilisant un secret cryptographique, en particulier en utilisant un procédé cryptographique symétrique et/ou asymétrique.

5. Procédé selon l'une quelconque des revendications précédentes, dans lequel l'information de contrôle (CPS) comprend une preuve d'autorisation, en particulier un certificat, dans lequel le message (CO) est un message acceptable (CO), lorsque la preuve d'autorisation peut être vérifiée avec succès dans le cadre du contrôle de l'information de contrôle (CPS).

6. Procédé selon l'une quelconque des revendications précédentes, dans lequel on mémorise dans le noeud de réseau respectif (N1, N2) une information de restauration, par laquelle l'action exécutée à l'étape b) peut être annulée, dans lequel la ou les mesure (s) prédéterminée (s) dans le cas d'un résultat de contrôle négatif à l'étape b) comprend/ comprennent l'annulation de l'action en se basant sur l'information de restauration.

7. Procédé selon l'une quelconque des revendications précédentes, dans lequel la ou les mesure(s) prédéterminée(s) dans le cas d'un résultat de contrôle négatif à l'étape b) comprend/comprennent l'émission d'un message d'alerte.

8. Procédé selon l'une quelconque des revendications précédentes, dans lequel on applique le procédé dans un réseau de communication d'une installation d'automatisation et la ou les mesure(s) prédéterminée(s) en cas de résultat de contrôle négatif à l'étape b) comprend/comprennent un arrêt d'urgence et/ou un fonctionnement de secours d'un ou de plusieurs composant(s) de l'installation d'automatisation.

9. Procédé selon l'une quelconque des revendications précédentes, dans lequel on exécute l'étape b) pour des messages (CO) qui remplissent un ou plusieurs critère(s), dans lequel on vérifie d'abord, pour des messages (CO) qui ne remplissent pas le ou les critère(s), l'information de contrôle (CPS) du message (CO) et on n'exécute qu'ensuite, uniquement en cas de résultat de contrôle positif, l'action couplée au message (CO).

10. Procédé selon la revendication 9, dans lequel on classe les messages (CO) en message temporellement critique et temporellement non critique, dans lequel un critère à remplir par le message (CO) est que le message (CO) est temporellement critique.

11. Procédé selon la revendication 9 ou 10, dans lequel on applique le procédé dans un réseau de communication d'une installation d'automatisation et on classe les messages (CO) en messages critiques et non critiques pour le fonctionnement de l'installation d'automatisation, dans lequel un critère à remplir par le message (CO) est que le message (CO) est non critique pour le fonctionnement de l'installation d'automatisation.

12. Procédé selon l'une quelconque des revendications 9 à 11, dans lequel un critère à remplir, pour un message (CO) dont l'action qui lui est couplée modifie un ou plusieurs paramètre (s) dans le noeud de réseau respectif (N1, N2), est que la modification d'au moins un des paramètres se situe en dessous d'une mesure prédéterminée ou pas au-dessus de la mesure prédéterminée.

13. Procédé selon la revendication 12, dans lequel on applique le procédé dans un réseau de communication d'une installation d'automatisation et le ou les paramètre(s) concerne(nt) une ou plusieurs grandeur(s) de réglage modifiable(s) dans le noeud de réseau respectif (N1, N2) concernant un processus exécuté par l'installation d'automatisation.

14. Procédé selon l'une quelconque des revendications 9 à 13, dans lequel un critère à remplir par le message (CO) est qu'un message identique ou similaire (CO) a été reçu et exécuté en se basant sur l'étape b) dans le noeud de réseau respectif (N1, N2) à l'intérieur d'une période de temps prédéterminée précédente, dans lequel le contrôle de l'information de contrôle (CPS) de ce message identique ou similaire (CO) a en outre conduit à un résultat de contrôle positif.

15. Réseau de communication ayant plusieurs noeuds de réseau (N1, N2), en particulier réseau de communication (N) d'une installation d'automatisation, dans lequel les noeuds de réseau (N1, N2) du réseau de communication sont configurés de telle manière qu'il soit possible d'exécuter un procédé, dans lequel
a) on transmet entre des noeuds de réseau (N1, N2) du réseau de communication des messages (CO), qui sont chaque fois combinés avec une information de contrôle (CPS), qui peut être contrôlée afin de constater si le message correspondant (CO) est acceptable, dans lequel un message acceptable (CO) conduit à un résultat de contrôle positif et un message inacceptable (CO) conduit à un résultat de contrôle négatif;
**caractérisé en ce que**
b) pour un ou plusieurs message (s) (CO) parmi une quantité de messages (CO), qui sont prévus pour un noeud de réseau respectif (N1, N2) d'au moins une partie des noeuds de réseau (N1, N2), on effectue chaque fois avec le noeud de réseau respectif (N1, N2) à la réception d'un message (CO) dans le noeud de réseau respectif (N1, N2) une action couplée au message (CO) sans contrôle de l'information de contrôle (CPS) combinée au message (CO), dans lequel, après avoir effectué l'action, on contrôle l'information de contrôle (CPS) au moyen du noeud de réseau respectif (N1, N2) et, en cas de résultat de contrôle négatif, on applique une ou plusieurs mesure(s) prédéterminée(s).

16. Réseau de communication selon la revendication 15, qui est configuré de telle manière qu'un procédé selon l'une quelconque des revendications 2 à 14 puisse être exécuté dans le réseau de communication (N).

17. Noeud de réseau à utiliser dans un réseau de communication selon la revendication 15 ou 16, dans lequel le noeud de réseau (N1, N2) est configuré de telle manière que, lors du fonctionnement dans le réseau de communication, il exécute pour un ou plusieurs message(s) (CO) parmi une quantité de messages (CO) qui sont prévus pour lui, respectivement à la réception d'un message (CO) sans contrôle de l'information de contrôle (CPS) combinée au message (CO), l'action couplée au message, dans lequel, après l'exécution de l'action (CO), il contrôle l'information de contrôle (CPS) et, en cas de résultat de contrôle négatif, il applique une ou plusieurs mesure(s) prédéterminée(s).
